# EUROPEAN PATENT APPLICATION

(11) **EP 1 325 976 A2**
(43) Date of publication of application: **09.07.2003**
(21) Application number: 03000027.7
(22) Date of filing: 03.01.2003
(51) Int. Cl.: D06H 5/00, A41D 27/24, C09J 5/00, C09J 5/06, C08J 5/12

(54) **Welded seam garments**

(30) Priority: 04.01.2002 US 38759
(71) Applicant: THE BURTON CORPORATION, Burlington, VT 05401 (US)
(72) Inventor: Yardley, Kristin, Stowe, Vermont 05672 (US)
(74) Representative: HOFFMANN - EITLE

(57) **Abstract**

A method of welding seams for an outerwear garment, and the outerwear created therefrom. In one embodiment, a seam is created between outerwear material segments (10) where dissimilar materials are joined together by applying at least one of a liquid bonding agent (20) and a sheet adhesive (20) between the materials and then applying heat and pressure to the seam, with or without the use of welding molds (40). In another embodiment, a seam is created between outerwear material segments with any seam configuration by applying both a liquid bonding agent and a sheet adhesive to the seam and then applying heat and pressure to the seam, with or without the use of welding molds.

## Description

This invention relates to outerwear garments with welded seams.

Seam joining techniques for garments have traditionally involved some form of stitched seams to assemble the garment. For the makers of outerwear garments, providing a waterproof seam is often a goal, since the usefulness of outerwear may be degraded if water penetration is possible along the outerwear seams. For purposes herein, "outerwear garments" or "outerwear" refers to jackets or pants. However, general reference to "garments" is to any type of clothing, including gloves, mitts, hats, jackets, pants, boot liners, etc. Additionally, for purposes herein, "waterproof" refers to a highly water resistant capacity, and not necessarily a capacity for complete water impenetrability. To this end, outerwear seam construction techniques such as taping of stitched seams or applying a waterproof adhesive to stitched seams have been used in the past to improve the water resistance of outerwear, even to the point of creating waterproof outerwear. However, these traditional seam waterproofing techniques have shown to have shortcomings. For example, stitched seams covered with seam tape may still be susceptible to water leakage if the tape were to degrade or delaminate. In addition, adding external materials such as seam tape adds weight and bulk to the outerwear, and decreases the breathability (water vapor permeability), each of which may make the outerwear less appealing.

The technique of welding of material seams, i.e., applying heat, pressure and some type of bonding substance along a seam, with or without also stitching the welded seams, has shown to be an alternative way to construct certain material seams. For seam welding without stitching, successful applications have been attained for some time in applications other than outerwear garments, such as in the construction of rubber rafts, kayaks, waterproof bags, wetsuits and chemical protective suits. In such applications, materials of the same material composition are known to be joined together and are less flexible than those used in outerwear garment construction.

Outerwear garments, on the other hand, often include multilayer materials of different composition to facilitate warmth, water resistance and breathability. Outerwear, particularly outerwear intended to be waterproof, requires seams that remain waterproof even in extreme weather conditions. To date, traditional outerwear construction methods have been able to attain a waterproof capacity at the expense of decreased breathability and increased weight and bulk of adding additional materials, such as seam taping to stitched seams. The inventors have appreciated that it would be advantageous to produce an outerwear garment by welding seams using various bonding agents that eliminates the need for stitching or seam tape at the welded seam, thus promoting a more waterproof and less bulky outerwear garment. The inventors have also appreciated that it would be advantageous to weld outerwear material segments of different material composition so that various materials and seam configurations could be utilized to further reduce the outerwear weight and bulk.

### SUMMARY OF THE INVENTION

Illustrative embodiments of the invention provide a method for constructing a garment, including
(A) providing first and second material segments, each material segment comprising a seam edge;
(B) applying both a liquid bonding agent and a sheet adhesive at the seam edge of at least the first material segment;
(C) overlapping the seam edge of the first material segment with the seam edge of the second material segment, thereby creating a seam line, wherein the liquid bonding agent and the sheet adhesive are disposed between the material segments the along the seam line; and
(D) applying heat and pressure to the seam line to weld the seam line.

In one aspect of the invention, the seam edge of the first material segment may be overlapped with the seam edge of the second material segment such that a first surface of the first material segment faces a second surface of the second material segment, thereby creating a stitchless seam line. The first and second surfaces may have different material compositions, e.g., in the case where the material segments are laminates and a shell outer layer of the first material segment is joined to a membrane layer of second material segment.

Another illustrative embodiment of the invention provides a method for constructing a garment. The method includes:
(A) providing a first material segment and a second material segment, the first material segment comprising a first surface of a first material composition and a stitchless seam edge, the second material surface comprising a second surface of a second material composition and a stitchless seam edge;
(B) applying at least one of a liquid bonding agent and a sheet adhesive at the seam edge of at least the first surface of the first material segment;
(C) overlapping the seam edge of the first material segment with the seam edge of the second material segment such that the first surface of the first material segment faces the second surface of the second material segment, thereby creating a stitchless seam line, wherein the at least one of the liquid bonding agent and the sheet adhesive is disposed between the first and second material segments along the seam line; and
(D) applying heat and pressure to the seam line by way of a welding mold to weld the seam line and join the material segments without stitching.

In one aspect of the invention, the act of applying at least one of a liquid bonding agent and a sheet adhesive comprises applying both a liquid bonding agent and a sheet adhesive.

In one aspect of the invention, the material segments each comprise two layers, a shell fabric layer and a breathable membrane layer.

In one aspect of the invention, the first surface of the first material segment is a shell fabric layer and the second surface of the second material segment is a breathable membrane layer.

In one aspect of the invention, the material segments each comprise three layers, a shell fabric layer, a breathable membrane layer and a backing fabric layer.

In one aspect of the invention, the first surface of the first material segment is the shell fabric layer and the second surface of the second material segment is the backing layer of the second material segment.

In one aspect of the invention, the act of applying heat and pressure comprises applying heat and pressure to the seam line by way of a metal welding mold.

In one aspect of the invention, the welding mold includes a surface that contacts the material segments at the seam line, the surface being between 0.25 cm and 1.75 cm wide.

In one aspect of the invention, the welding mold applies pressure simultaneously to a length of the seam in excess of 3cm and up to at least 125cm.

In one aspect of the invention, the welding mold is curved.

In one aspect of the invention, a garment, such as an outerwear garment, is made using any of the methods outlined above.

In yet another illustrative embodiment of the invention, a method is provided for constructing an outerwear garment. The method comprises providing a first outerwear material segment and a second multilayer outerwear material segment. The first material segment comprising a first surface of a first material composition and a stitchless seam edge, the second material segment comprising a second surface of a second material composition and a stitchless seam edge. A bonding substance is provided to bond the material segments. The seam edge of the first material segment is overlapped with the seam edge of the second material segment such that the first surface of the first material segment faces the second surface of the second material segment, thereby creating a stitchless seam line, wherein the bonding substance is disposed along the seam line. Heat and pressure are applied by way of a welding mold to the seam line to weld the seam line and join the material segments without stitching.

In still a further embodiment of the invention, a method is provided for constructing an outerwear garment. The method comprises providing first and second outerwear material segments, each material segment comprising a seam edge. Both a liquid bonding agent and a sheet adhesive are applied to the seam edge of the first material segment. The seam edge of the second material segment is overlapped with the seam edge of the first material segment, thereby creating a seam line, wherein the liquid bonding agent and the sheet adhesive are disposed between the material segments along the seam line. The final step comprises applying heat and pressure by way of a welding mold to the seam line to weld the seam line.

These and other aspects of the invention will be apparent and/or obvious from the following description and the appended claims.

Embodiments of the invention are described with reference to the following drawings, in which like numerals reference like elements, and wherein:
Figures 1-3 are side views of material segments with varying numbers of layers;
Figures 4-6 are side views of material segments with varying numbers of layers joined using one seam configuration;
Figures 7-9 are side views of material segments with varying numbers of layers joined using another seam configuration;
Figures 10-13 are perspective views of various representative welding molds;
Figure 14 is a perspective view of a seam welding application using welding molds according to one embodiment of the invention; and
Figure 15 is a side view of a seam welding application using welding molds according to another embodiment of the invention.

Illustrative embodiments of the invention provide a method of joining seams in a garment, such as an outerwear garment, and the garment thus formed. In at least one embodiment, welded seams formed in the garment have no stitching and no seam tape to hold the seams together and/or provide water resistance. Generally, the welding process includes providing two material segments with edges that are to form the intended seam line between the two material segments. The shape of material edges and the resultant seam line may vary depending on the location of the seam on the garment, the function of the seam or other considerations. A bonding substance is provided between the material segments along the desired seam line. The bonding substance may be one or more of the material segments themselves that, when heated, bond the material segments together, or may be a liquid bonding agent, such as a glue, or a sheet adhesive, such as an adhesive film, that is applied between the joined material segments. The material segments are then overlapped in any of various configurations to form the seam line, with the bonding substance disposed along the seam line between the two material segments. Finally, heat and pressure is applied to the seam line for a period of time, causing the two material segments to weld to each other and form a welded seam. For purposes herein, welding the seam line means welding at least a portion of the overlapped material segments together.

In one illustrative embodiment, a method of stitchless seam welding a garment, and the outerwear created from such welding process, is disclosed where material surfaces to be welded are of different material compositions and a liquid bonding agent, a sheet adhesive, or both a liquid bonding agent and a sheet adhesive are used in the welding process. In another illustrative embodiment, a method of joining outerwear with stitchless seams by a welding process, and the outerwear resulting therefrom, is disclosed where the outerwear material has any number of layers and any seam configuration, and the process includes using both liquid bonding agents and sheet adhesives. For example, the process may entail welding material layers with the same material composition or different composition. In another illustrative embodiment of the invention, a method of stitchless seam welding an outerwear garment is disclosed where the welding process includes the use of welding molds, in the shape of the desired seam line to weld materials of different material composition using a liquid bonding agent, a sheet adhesive, or both a liquid bonding agent and a sheet adhesive. Welding molds may also be used in still another illustrative embodiment to weld outerwear seams where the outerwear material has any number of layers and any seam configuration, using both liquid bonding agents and sheet adhesives. The exact material composition, seam configuration and welding process utilized to weld the outerwear seams will depend on the desired performance properties of the outerwear.

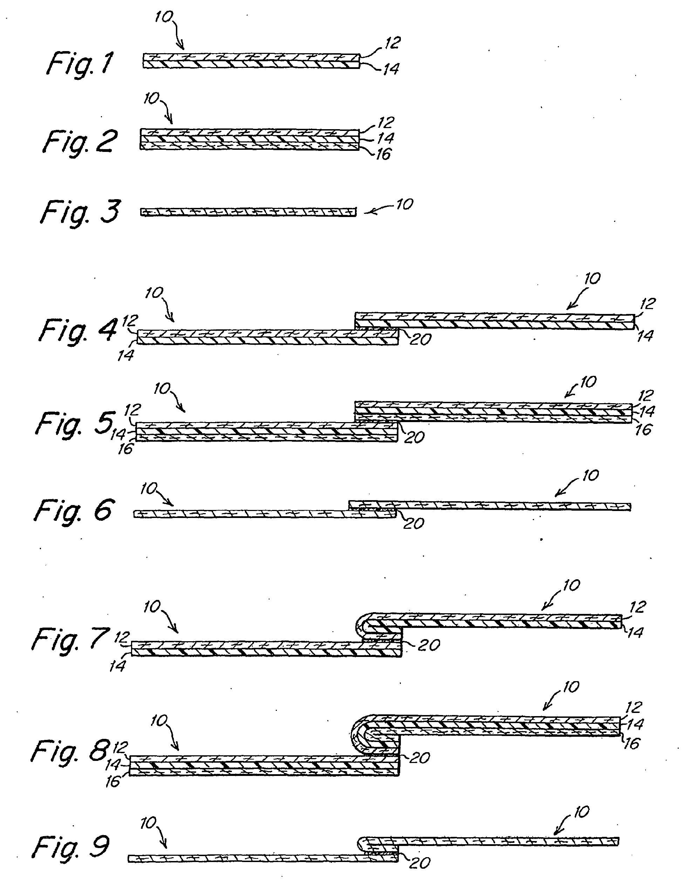

In an illustrative embodiment of the invention, a welded seam is formed in an outerwear garment made from laminate material sections where material surfaces of different composition are welded together. An example of such a material segment 10 may be a multilayer laminate material, for example a two layer material construction, such as that shown in Figure 1, where the external layer, as the garment is worn, is a shell fabric layer 12 that is laminated to an internal membrane layer 14. The fabric layer 12 may be made from fibers that may be woven, knitted or felted. The membrane layer 14 may be a permeable or nonpermeable layer of fabric or nonfabric material, and may provide waterproof protection while allowing water vapor to escape through the membrane material layer (i.e., a breathable membrane layer).

The shell fabric layer 12 may include one of the following materials: nylon, nylon blend, polyamide, polyester, polyester blend, cotton, cotton blend, wool, wool and acrylic blend, nylon and LYCRA® blend, polyester and LYCRA® blend, or any other suitable materials known to those of skill in the art. The membrane layer 14 may include a polyurethane material, an expanded polytetrafluoroethylene (ePTFE), or any other suitable material known to those of skill in the art. In addition, a durable water resistant coating may be applied to the shell fabric, either before or after the material is manufactured, to further enhance the waterproof quality of the garment.

In another embodiment, the material segment may be a multilayer laminate material having three layers, as shown in Figure 2, where a backing fabric layer 16 is laminated to the internal surface of the previously described membrane layer 14, e.g., to provide protection against damage to the membrane layer 14. The backing fabric layer 16 may be made of polyester, or other suitable fibrous materials. The backing fabric layer 16 may also provide added comfort for the wearer of the outerwear garment since the backing fabric layer 16, and not the membrane layer 14, may contact the wearer. It should be understood that the laminate material is not limited to two or three layers of material, and it is anticipated that a material having any suitable number of layers may be used to construct an outerwear garment of the present invention. It should be understood that the first and second material segments are not limited to two multilayer segments with the same number of layers. For example, a multilayer material could be selected to be welded to a single layer material segment where the material surfaces of the two segments to be welded are of different composition. As another example, two single layer material segments could be selected to be welded where the material surfaces of the two segments to be welded are of different composition. Other possible combinations of single layer material segments 10, such as that shown in Figure 3, and multilayer materials where the material surfaces to be welded are of different material compositions are also contemplated within the scope of the invention.

Once desired materials are selected for the garment, the materials may then be formed into material segments in any desirable size or configuration, depending on the desired product. For example, the material segments may be die cut using a blade, such as a steel blade, shaped according to each segment's configuration. In another embodiment, the segments may be laser cut. Other suitable ways of cutting or otherwise forming the material segments are also possible, and are contemplated within the scope of the present invention. When forming the material segments, each segment to be joined to another segment at a seam is formed to have an appropriate seam region, as discussed in more detail below.

The formed material segments may be joined using a lap-type joint such that surfaces in the material segments having different compositions are joined together as shown in Figures 4 and 5. In Figure 4, material segments formed from two layer material laminates are joined so that the membrane layer 14 of a top segment is adhered to the shell fabric layer 12 of a bottom segment. In Figure 5, material segments formed from three layer material laminates are joined so that the backing layer 16 of a top material segment is joined to the shell fabric layer 12 of a bottom material segment. Thus, in this embodiment, material segments are joined so that surfaces of the material segments having different compositions are joined together. An advantage of this seam configuration may be that no portion of either material segment is folded over in order to bond material layers of the same material composition, resulting in a seam that requires less material and is flat and less bulky. This is in contrast to other seam forming techniques where the joined layers of material segments have a same composition, e.g., where the shell fabric layer of a first material segment is joined to the shell fabric layer of a second material segment.

Before joining material segments, a bonding substance 20 shown in Figures 4 and 5 may be applied at the seam edge of at least one of the material segments. For purposes herein, applying a bonding substance to a material segment includes both direct application of the bonding substance to a material segment, as well as any other way of providing the bonding substance to the material segment. In one embodiment, a bonding substance in the form of a liquid bonding agent 20 is applied to at least one of the seam edges of the material segments to be welded. Any suitable liquid bonding agents may be used such as, for example, a polyurethane-based glue. Such a polyurethane glue may be supplied by Huang -Jiang Nan Pao Shoes, Materials Factory, Taipei, Taiwan. By way of illustration for the two and three layer material laminate embodiments, the liquid bonding agent may be applied to the shell fabric layer 12 or the membrane layer 14, or both, when using two layer material laminates as shown in Figure 4, or to the shell fabric layer 12 or the backing layer 16, or both, when using three layer material laminates as shown in Figure 5. The liquid bonding agent may be applied by brushing the liquid onto the seam edge, by screen printing, or any other suitable application process. The amount of liquid bonding agent applied to the seam edge may vary depending on the size and location of the seam line on the outerwear garment, the types of layers being joined or other factors. As one example, the liquid bonding substance may be applied 0.1 mm thick.

In another embodiment, a sheet adhesive may be applied as the bonding substance 20 at the seam edge of at least one of the material segments to be welded. The sheet adhesive may be any suitable piece of adhesive material that, when heated, bonds to contacting surfaces. A thermoplastic adhesive film, such as may be provided by Bemis USA of Shirley, Massachusetts, USA, is an example of a class of sheet adhesives that may be used in conjunction with the present invention. More specifically, a polyurethane film, a polyester film, or a nylon adhesive film are exemplary embodiments of sheet adhesives that may be applied at a seam edge for bonding the seam. The thickness of the sheet adhesive may vary depending on the size and location of the seam on the outerwear, as well as the type of materials to be joined. In one embodiment, the sheet adhesive film is 0.1 mm thick.

In another embodiment, both a liquid bonding agent and a sheet adhesive may be applied at a seam edge as a bonding agent 20 to bond the seam. The liquid bonding agent and sheet adhesive may be applied to the seam edge, e.g., with the liquid bonding agent being applied first to the seam edge and the sheet adhesive applied over the liquid bonding agent, prior to joining the two material segments together. Other arrangements are also contemplated such as first applying the sheet adhesive to the seam edge, with the liquid bonding agent applied on top of the sheet adhesive.

In another embodiment, single layer material segments 10, as shown in Figure 6, may be joined by both a liquid bonding agent and a sheet adhesive. Such a single layer material 10 may be a single fabric layer without a membrane, and may be made of nylon, nylon blend, polyester, polyester blend, or other fabrics suitable to one of ordinary skill in the art. The material segments may be joined using a lap-type joint, as shown in Figure 6, or other suitable seam configurations. The material may also include a durable water resistant coating, and the material segments to be welded may be cut by a die, laser or other cutting process to form the desired material seam edges.

As another example, a seam may be configured, as shown in Figures 7-9, in a single folded layer configuration where material segments of the same material composition are welded together. Many other seam configurations are possible and contemplated within the scope of this invention where both a liquid bonding agent and a sheet adhesive are used to bond either material segments of different material composition or material segments of the same material composition in an outerwear seam welding process.

Once the material segments are configured to form a desired seam line and the bonding agent is applied at the seam line, heat and pressure may be applied to the seam line for a period of time, or dwell time, to weld the seam and join the material segments without the use of stitching. Both heat and pressure may be applied to the seam by heated platens, molding dies or other portions of a press moved by a hydraulic, forced air, electromechanical, or other means. The welding temperature, applied pressure and dwell time may vary depending on such factors as the type and number of material layers, material thickness, and the location of the seam on the outerwear. For example, the more material layers to be welded or the larger the size of the area to be welded, the higher the temperature, pressure and/or the longer the dwell time that may be needed to weld the seam. Other factors besides those enumerated here, as appreciated by those of skill in the art, may also affect the welding parameters.

In one embodiment, a liquid bonding agent is used in the welding process to bond two-layer material segments consisting of a nylon shell fabric layer and a polyurethane membrane layer. The welding process may require the heated press to attain a welding temperature in the range of 150°C-200°C before being applied to the seam, with a dwell time between 15 and 20 seconds. The pressing force for the heated press may be set at a gauge pressure of approximately 60 pounds per square inch. The seam may then be cooled down to between 10°C and 25°C, depending on the size and shape of the seam and the ambient air temperature during the welding process. Each of the heating, pressure setting and cooling functions may be generated by, respectively, a heating element (e.g., an electrical resistance heating element, induction heater, etc.), air pressure apparatus and a cooling element (e.g., a liquid cooling system) that are part of the heated press. Additionally, the seam cooling process may be facilitated by water or air supplied to the cooling element. The resultant welded seam may have a seam width between 0.5 and 0.8 cm, and may bond all overlapping portions of the materials segments or just a portion of the overlapping portions.

In another embodiment, a sheet adhesive is used in the welding process to bond two-layer material segments along a seam line consisting of a nylon shell fabric layer and a polyurethane membrane layer. Welding such an outerwear seam with sheet adhesives may require the heated press to be heated to between 150°C-220°C, with a welding dwell time of at least 5 seconds to bond the seam. The pressing force of the heated press may be applied by air pressure where the gauge pressure is set at approximately 40 pounds per square inch. As discussed previously, the welding temperatures, dwell times or pressure settings may be varied depending on the material composition and thickness, location of the seam or other factors.

In another illustrative embodiment of the invention, a method of welding the seams in outerwear material segments with any seam configuration or number of material layers using both a liquid bonding agent and a sheet adhesive, and the outerwear created from such welding process, is disclosed. Welding such an outerwear seam with liquid bonding agents and sheet adhesives may require the heated press to be heated to between 150°C-200°C, with a welding dwell time of at least between 10 and 20 seconds to bond the seam. The pressing force of the heated press may be applied by air pressure where the gauge pressure is set at approximately 60 pounds per square inch.

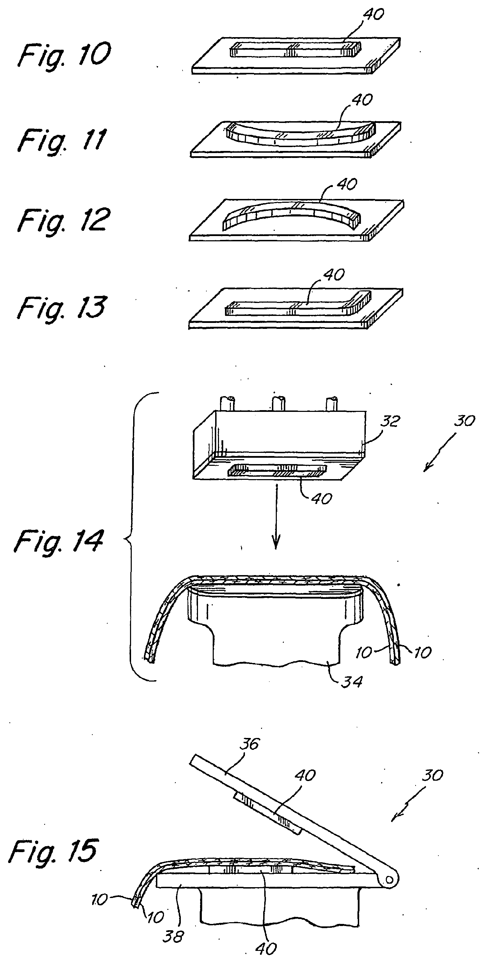

In another embodiment of the invention, at least one welding mold is used to apply heat and pressure to the seam line where material layers are welded using a bonding agent, without stitching the welded seam. A welding mold may be a structure that can apply pressure simultaneously to an extended length of a seam, such as simultaneously to more than 1 inch of a seam length. In one embodiment, a welding mold would not include a roller-type press that applies rolling pressure at a nip between rollers as they move in relation to the seam. As shown in Figures 10-13, the welding molds 40 may be made of metal and suitably shaped and sized according to the shape and size of the desired seam line. The welding molds 40 may be made of, for example, brass, aluminum, or stainless steel, depending on the welding demands on different parts of the outerwear. It should be understood that these described mold materials are not the only materials that may be used for the welding molds, as other suitable materials, whether metallic or nonmetallic, may be used.

The welding molds may be straight, for use in straight seam welding, or may be curved or otherwise shaped to match the curve or shape of a desired seam line. The size of the welding molds may vary according to the particular welding application. In one embodiment of the invention, the molds are between 0.25 cm and 1.75 cm wide, preferably 1 cm wide 9(i.e., at a surface that contacts the material segments during welding), as well as 2 inches high from a support plate, and have a length that varies between 3.0 cm and 125 cm or more, depending on the location or other parameters of the outerwear seam. Other mold dimensions are also contemplated that maybe used in the welding process.

One advantage for using a welding mold in the garment construction process may be that the molds keep the seams aligned and provide a concentrated location for the heat of the welding process, namely within the molded area. Another advantage for using a welding mold in the outerwear construction process may be when, for example, trying to weld curved seams. The welding molds may facilitate a smooth, high quality seam without the puckering that may otherwise occur when trying to maintain proper alignment of curved seam edges during welding using only a flat surfaced heated press without molds or other arrangement. Other advantages for using welding molds, of any shape, will be appreciated by those of skill in the art.

A welding mold, in the shape of the desired seam, may be attached in some manner to a heated press to facilitate the seam welding process. In one embodiment, as shown in Figure 14, a single welding mold 40 is attached to an upper portion 32 of a heated press 30, with the lower portion 34 of the press 30 including a flat surface on which the material segments 10 are placed prior to welding. As discussed previously, the material segments are arranged so that the desired seam line takes the form of the welding mold. The mold is heated to the desired temperature by the heating element of the heated press. The upper portion 32 and the lower portion 34 of the press 30 are then brought together, such as by electromechanical, hydraulic, or human power, to exert a force on the material segments 10 positioned between the two pressing portions. The welding temperature and pressure exerted for a minimum dwell time produces a welded seam between the material segments. In another embodiment, shown in Figure 15, opposing welding molds 40 are attached to two sides 36, 38 of a heated press 30 so that during the welding process, one or both of the welding molds 40 is heated, the sides 36, 38 of the heated press are brought together, and the material segments 10 are pinched between two welding molds and welded along the seam line in the shape of the two welding molds.

In another embodiment of the invention, welding molds in the shape of the intended seam line are used with both liquid bonding agents and sheet adhesives to weld outerwear material segments of any seam configuration. In this embodiment, as with previously discussed embodiments, material segments of different material composition may be welded together using both a liquid bonding agent and a sheet adhesive or material segments of the same material composition may be welded together. However, with this embodiment, welding molds in the shape of the desired seam line are added to the welding process to facilitate the welding of the seam. The welding molds may be brass, aluminum, stainless steel, or other appropriate substance, and may be shaped in any of a variety forms depending on the intended shaped of the seam line. These welding molds may be used in a welding application such as is depicted in Figures 14 or 15, or in other applications as will be appreciated by one of skill in the art.

Having described certain embodiments of the present invention, various alterations, modifications, and improvements will readily occur to those skilled in the art. It should be understood that a variety of material types, seam configurations, and adhesive agents could be provided besides those shown in the illustrative embodiments described above. Additionally, the parameters of the welding process itself, such as the welding temperatures, pressing forces, dwell times and the use of particularly shaped welding molds may be varied for particular seam welding applications. Therefore, such alterations, modifications and improvements are intended to be within the spirit and scope of the invention. Accordingly, the foregoing description is by way of example only, and not intended to be limiting.

## Claims

1. A method for constructing a garment, the method comprising acts of:
(A) providing first and second material segments (10), each material segment comprising a seam edge;
(B) applying both a liquid bonding agent and a sheet adhesive (20) at the seam edge of at least the first material segment;
(C) overlapping the seam edge of the first material segment with the seam edge of the second material segment, thereby creating a seam line, wherein the liquid bonding agent and the sheet adhesive are disposed between the material segments the along the seam line; and
(D) applying heat and pressure to the seam line to weld the seam line.

2. The method of claim 1, wherein the step of overlapping comprises:
overlapping the seam edge of the first material segment with the seam edge of the second material segment such that a first surface of the first material segment faces a second surface of the second material segment, thereby creating a stitchless seam line, wherein the first and second surfaces have different material compositions.

3. A method for constructing a garment, the method comprising acts of:
(A) providing a first material segment (10) and a second material segment (10), the first material segment comprising a first surface of a first material composition and a stitchless seam edge, the second material surface comprising a second surface of a second material composition and a stitchless seam edge;
(B) applying at least one of a liquid bonding agent and a sheet adhesive (20) at the seam edge of at least the first surface of the first material segment;
(C) overlapping the seam edge of the first material segment with the seam edge of the second material segment such that the first surface of the first material segment faces the second surface of the second material segment, thereby creating a stitchless seam line, wherein the at least one of the liquid bonding agent and the sheet adhesive is disposed between the first and second material segments along the seam line; and
(D) applying heat and pressure to the seam line by way of a welding mold (40) to weld the seam line and join the material segments without stitching.

4. The method of claim 3, wherein the act of applying at least one of a liquid bonding agent and a sheet adhesive comprises applying both a liquid bonding agent and a sheet adhesive.

5. The method of any one of claims 1 to 4, wherein the material segments each comprise two layers, a shell fabric layer (12) and a breathable membrane layer (14).

6. The method of claim any one of claims 2 to 5, wherein the first surface of the first material segment is a shell fabric layer (12) and the second surface of the second material segment is a breathable membrane layer (14).

7. The method of any one of claims 1 to 5, wherein the material segments each comprise three layers, a shell fabric layer (12), a breathable membrane layer (14) and a backing fabric layer (16).

8. The method of claim 7, wherein a first surface of the first material segment is the shell fabric layer (12) and a second surface of the second material segment is the backing layer (16) of the second material segment.

9. The method of any one of claims 1 to 8, wherein the act of applying heat and pressure comprises applying heat and pressure to the seam line by way of a metal welding mold (40).

10. The method of claim 9, wherein the welding mold includes a surface that contacts the material segments at the seam line, the surface being between 0.25 cm and 1.75 cm wide.

11. The method of any one of claims 9 to 10, wherein the welding mold applies pressure simultaneously to a length of the seam in excess of 3cm and up to at least 125cm.

12. The method of any one of claims 9 to 11, wherein the welding mold is curved.

13. An outerwear garment made using the method of any one of claims 1 to 12.

14. A garment made using the method of any one of claims 1 to 12.
